# EUROPÄISCHE PATENTSCHRIFT

(11) **EP 3 143 281 B1**
(45) Veröffentlichungstag und Bekanntmachung des Hinweises auf die Patenterteilung: **24.06.2020**
(21) Anmeldenummer: 15716443.5
(22) Anmeldetag: 25.03.2015
(51) Int. Cl.: F04B 17/03, F04B 17/06, F04D 13/06, F04B 49/06, F04D 27/00

(54) **VERFAHREN ZUR STEUERUNG EINES PUMPENSYSTEMS SOWIE PUMPENSYSTEM**
METHOD FOR OPERATION OF A PUMP SYSTEM AND A PUMP SYSTEM
PROCÉDÉ DE FONCTIONNEMENT D'UN SYSTÈME DE POMPE ET UN SYSTÈME DE POMPE

(30) Priorität: 14.05.2014 DE 102014209159
(43) Veröffentlichungstag der Anmeldung: 22.03.2017
(73) Patentinhaber: WIWA WILHELM WAGNER GMBH & CO. KG, 35633 Lahnau (DE)
(72) Erfinder: TURCZAK, Peter, 35578 Wetzlar (DE)
(74) Vertreter: advotec.
(86) Internationale Anmeldenummer: PCT/EP2015/056457
(87) Internationale Veröffentlichungsnummer: WO 2015/172931

(56) Entgegenhaltungen:
- EP-A1- 0 478 944
- WO-A1-2013/178306
- DE-A1-102012 104 214
- DE-B- 1 012 195
- DE-T5-112011 103 835

## Beschreibung

Die Erfindung betrifft ein Verfahren zur Steuerung eines Pumpensystems sowie ein Pumpensystem mit einer Pumpeneinheit zum Ausgeben von Mehrkomponentenmaterial unter Druck mit einer Spritzpistole, wobei die Pumpeneinheit eine Pumpenvorrichtung, einen Mischer und eine Spritzpistole umfasst, wobei die Pumpenvorrichtung zumindest zwei Pumpen zur Förderung vom Komponentenmaterial und jeweils zugeordnete Flüssigkeitsspeicher zur Speicherung von Komponentenmaterial aufweist, wobei das Pumpensystem eine Steuervorrichtung aufweist, wobei die Steuervorrichtung eine Steuereinrichtung und eine Datenbank umfasst.

Derartige Pumpensysteme und Verfahren zur Steuerung bzw. zum Betrieb von Pumpensystemen sind aus dem Stand der Technik hinreichend bekannt und werden regelmäßig zur Oberflächenbeschichtung bzw. zum Auftragen oder Versprühen eines Mehrkomponentenmaterials auf eine Oberfläche eingesetzt. Das Mehrkomponentenmaterial besteht dabei aus einer oder mehreren Basiskomponentenmaterialien und einem Härterkomponentenmaterial, wobei diese Komponentenmaterialien jeweils für sich getrennt in Flüssigkeitsspeichern aufbewahrt werden. Jedem Flüssigkeitsspeicher ist eine Pumpe zur Förderung des jeweiligen Komponentenmaterials zugeordnet. Vorzugsweise werden hier pneumatisch angetriebene Kolbenpumpen eingesetzt, wobei jedoch auch andere Arten von Pumpen Verwendung finden können. Mittels der jeweiligen Pumpen werden die Komponentenmaterialien zu einem sogenannten Mischer gefördert und innerhalb des Mischers derart durchmischt, dass das so ausgebildete Mehrkomponentenmaterial aushärten kann. Von dem Mischer wird mittels der Pumpe das Mehrkomponentenmaterial unter Druck zu einer sogenannten Spritzpistole gefördert. Die Spritzpistole muss dabei nicht zwangsläufig eine Pistolenform aufweisen, sondern es kann sich um jede Art von Düse handeln, mit der das Mehrkomponentenmaterial auf eine Oberfläche durch Zerstäubung versprüht werden kann. Dies kann vorzugsweise unter Verwendung von Druckluft erfolgen. Optional können auch ein oder mehrere Erhitzer zur Temperierung des Komponentenmaterials vorgesehen sein. Die Pumpen und die Flüssigkeitsspeicher bilden zusammen eine Pumpenvorrichtung aus, die über eine Bedieneinrichtung von einer Bedienperson bedient bzw. gesteuert werden kann.

Vielfach ist eine derartige Pumpenvorrichtung transportabel ausgestattet, so dass sie einfach in Nähe der zu beschichteten Gegenstände platziert werden kann. Über die Bedieneinrichtung kann die Pumpenvorrichtung dann ein- und ausgeschaltet werden, wobei auch ein Mischungsverhältnis der Komponentenmaterialien an der Bedieneinrichtung eingestellt werden kann. Eine derartige Einstellung erfolgt regelmäßig über eine Variation der jeweiligen Fördermenge der Pumpen. Die Bedieneinrichtung kann daher auch verschiedene Sensoren, Durchflussmengenmesser, Hublängenmesser oder ähnliche Mittel zur Bestimmung und Beeinflussung einer Fördermenge der Pumpen aufweisen. Darüber hinaus muss auch immer eine Spülung einer Förderleitung der Pumpen bzw. des Mischers und der Spritzpistole nach einer Nutzung oder bei beispielsweise einem Farbwechsel erfolgen. Die Bedieneinrichtung verfügt daher häufig auch über eine sogenannte Spülfunktion.

Eine aus einer Pumpenvorrichtung, einem Mischer und einer Spritzpistole gebildete Pumpeneinheit wird beispielsweise zur Beschichtung von Oberflächen mit Korrosionsschutz oder Lacken an oder in Schiffen, Metallbauwerken oder industriellen Anlagen in situ eingesetzt. Wesentlich dabei ist, dass die Pumpeneinheit leicht von einer Bedienperson transportiert und an der jeweiligen Arbeitsstelle in Betrieb genommen werden kann. Eine Förderleitung von der Pumpenvorrichtung zur Spritzpistole kann dabei eine Länge von wenigen Metern bis zu einigen hundert Metern aufweisen. Dies ist insbesondere dann der Fall, wenn eine Oberflächenbeschichtung an schwer zugänglichen Stellen, wie beispielsweise innerhalb eines Schiffsrumpfs, erfolgt.

Während des Betriebs der Pumpeneinheit trägt die betreffende Bedienperson mit der Spritzpistole das Mehrkomponentenmaterial auf die zu beschichtende Oberfläche auf, wobei die Bedienperson während des Beschichtens kontinuierlich ein Arbeitsergebnis überwacht und eventuell korrigierende Einstellungen an der Bedieneinrichtung, wie beispielsweise eine Änderung eines von ihr zuvor eingestellten Mischungsverhältnisses vornimmt. Weiter muss die Bedienperson eine fehlerfreie Funktion der Pumpeneinheit sowie eine ausreichende Befüllung der Flüssigkeitsspeicher kontinuierlich überwachen. Wenn beispielsweise Komponentenmaterial nicht nachgefördert werden kann, kann die Bedienperson gegebenenfalls erst nach einem fehlerhaften Auftrag, beispielsweise ohne Härter, auf diesen Umstand aufmerksam werden. Dies ist insbesondere dann auch von Bedeutung, wenn die Förderleitung besonders lang ist, und mögliche Änderungen an der Pumpenvorrichtung sich erst bei einem Auftragen mit der Spritzpistole zeitlich versetzt für die Bedienperson bemerkbar machen. Insgesamt muss die Bedienperson daher während des Vorgangs des Auftragens des Mehrkomponentenmaterials neben dem eigentlichen Auftragen eine Reihe weiterer Variablen bzw. Betriebsparameter und Umgebungsfaktoren überwachen, um ein zufriedenstellendes Arbeitsergebnis sicherzustellen. Aufgrund der Komplexität der Arbeitsaufgabe für die Bedienperson resultieren daraus regelmäßig Bedienungs- bzw. handwerkliche Fehler, die sich negativ auf ein Arbeitsergebnis oder einen Arbeitsfortschritt auswirken.

Hinsichtlich der Einstellung der Mischungsverhältnisse der Komponentenmaterialen ist es bekannt, dass Hersteller von Komponentenmaterialen sogenannte Rezepturen veröffentlichen. Eine Rezeptur beinhaltet beispielsweise Informationen über geeignete Kombinationen von Komponentenmaterial des Herstellers sowie deren Mischungsverhältnisse, Bereichsangaben von Mischungsverhältnissen, Verarbeitungstemperaturen von Komponentenmaterial, Umgebungsparameter wie Temperatur und Luftfeuchte sowie Bereichsangaben hierzu. Um ein gewünschtes Arbeitsergebnis zu erzielen, ist es daher für eine Bedienperson erforderlich, die Umgebungsparameter einzuschätzen und unter Berücksichtigung des gewünschten Arbeitsergebnisses eine Einstellung der Pumpenvorrichtung an der Bedieneinrichtung vorzunehmen. Dies gilt sowohl für transportable wie auch für stationäre Pumpeneinheiten. Nach einem ersten Auftragen des Mehrkomponentenmaterials erfolgt dann regelmäßig eine Überprüfung des Arbeitsergebnisses und eine eventuelle Anpassung der Betriebsparameter der Pumpenvorrichtung bzw. Pumpeneinheit im Rahmen der Rezeptur, wobei dann regelmäßig die betreffende Rezeptur beschafft, bei der Pumpeneinheit vorgehalten und durchgesehen werden muss, was einen Zeitaufwand und weitergehende Kenntnisse im Bereich der Spritz- und Lackiertechnik erfordert. So werden auch von unterschiedlichen Herstellern jeweils unterschiedliche Angaben in Rezepturen zu Komponentenmaterialien gemacht.

Die Rezepturen selbst werden von den Herstellern der Komponentenmaterialen unter Laborbedingungen erprobt und verifiziert. So kann es sein, dass es im Rahmen einer realen Anwendung einer Rezeptur mit einer Pumpeneinheit von der vom Hersteller angegebenen Rezeptur durchaus abgewichen werden kann, da der Hersteller die realen Arbeitsbedingungen zur Ausarbeitung der Rezeptur nicht ohne Weiteres simulieren konnte oder diese Arbeitsbedingungen bisher nicht vorgesehen waren. Beispielsweise Umgebungseinflüsse, wie Sonneneinstrahlung, Wind, Luftfeuchte, Lufttemperatur, Temperatur der zu beschichteten Oberfläche und andere, weitere Faktoren können durchaus zu einem befriedigenden Arbeitsergebnis führen, welches nicht mehr im Rahmen einer vom Hersteller vorgegebenen Rezeptur liegt. Umgekehrt können auch Arbeitsbedingungen bzw. Umgebungsparameter unzureichende Arbeitsergebnisse bewirken, obwohl die vom Hersteller in einer Rezeptur angegebenen Vorgaben eingehalten wurden. Grundsätzlich ist jedoch ein Hersteller von Komponentenmaterialen immer bestrebt, Rezepturen zu den Komponentenmaterialien zu veröffentlichen, die ausreichend sicher verifiziert und nacharbeitbar sind, wodurch daher in den Rezepturen eine ausreichende Sicherheitsreserve hinsichtlich der Angaben vorgesehen ist.

Aus der WO 2013/178306 A1 ein Verfahren zum Betrieb eines Pumpensystems sowie ein Pumpensystem mit den Merkmalen des Oberbegriffs der Hauptansprüche bekannt. Das Pumpensystem weist zwei Pumpen mit jeweils zugeordneten Flüssigkeitsspeichern, einen statischen Mischer sowie eine Spritzpistole auf, die eine Pumpeneinheit ausbilden. Die Pumpeneinheit weist darüber hinaus eine Vorrichtung zur Steuerung der Pumpen bzw. von Ventilen auf.

Die DE 11 2011 103835 T5 zeigt ein Pumpensystem mit zwei voneinander unabhängig ausgebildeten Pumpen für jeweils ein Komponentenmaterial, wobei die Pumpen jeweils über Steuereinrichtungen verfügen, die miteinander verbindbar sind. Diese Verbindung erfolgt über eine sogenannte Schnittstellenkomponente, über die von einem Nutzer auch ein gewünschtes Mischungsverhältnis der Komponentenmaterialien gewählt werden kann.

Eine Pumpe ist in der DE 10 2012 104214 A1 beschrieben, wobei die Pumpe einen passiven Transponder aufweist, der mittels einer Steuervorrichtung drahtlos konfigurierbar ist. Im Wesentlichen soll eine Software einer Steuervorrichtung der Pumpe durch berührungslosen Datenaustausch konfiguriert werden. Dies kann u. a. über eine sogenannte "App" eines Mobiltelefons durchgeführt werden. Weiter kann auch eine Konfiguration ergänzend über das Internet und eine zentrale Datenbank erfolgen. Beispielsweise können dann auch Benutzerinformationsdaten des Pumpenherstellers übertragen werden.

Der vorliegenden Erfindung liegt daher die Aufgabe zugrunde, ein Verfahren zur Steuerung eines Pumpensystems und ein Pumpensystem vorzuschlagen, welches eine vereinfachte Anpassung des Pumpensystems an verschiedene Komponentenmaterialien ermöglicht.

Diese Aufgabe wird durch ein Verfahren mit den Merkmalen des Anspruchs 1 und ein Pumpensystem mit den Merkmalen des Anspruchs 16 gelöst.

Bei dem erfindungsgemäßen Verfahren zur Steuerung eines Pumpensystems mit einer Pumpeneinheit zum Ausgeben von Mehrkomponentenmaterial unter Druck mit einer Spritzpistole umfasst die Pumpeneinheit eine Pumpenvorrichtung, einen Mischer und eine Spritzpistole, wobei die Pumpenvorrichtung zumindest zwei Pumpen zur Förderung von Komponentenmaterial und jeweils zugeordnete Flüssigkeitsspeicher zur Speicherung von Komponentenmaterial aufweist, wobei das Pumpensystem eine Steuervorrichtung aufweist, wobei die Steuervorrichtung eine Steuereinrichtung und eine Datenbank umfasst, wobei in der Datenbank Rezepturen zur Mischung von Mehrkomponentenmaterialen gespeichert sind, wobei die Datenbank in regelmäßigen Zeitabständen oder nach Anforderung von der Steuervorrichtung mit zumindest einer weiteren externen Datenbank synchronisiert wird, wobei mittels der Steuereinrichtung eine Steuerung der Pumpeneinheit in Abhängigkeit einer Rezeptur erfolgt.

Die Steuervorrichtung des Pumpensystems steuert folglich die Pumpeneinheit bzw. die Pumpenvorrichtung, beispielsweise durch die Vorgabe eines Mischungsverhältnisses. Dadurch, dass die Steuervorrichtung die Steuereinrichtung mit der Datenbank aufweist, kann von der Steuereinrichtung die Pumpenvorrichtung unmittelbar gesteuert werden, derart, dass der Pumpenvorrichtung durch die Steuereinrichtung ein Mischungsverhältnis gemäß einer in der Datenbank gespeicherten Rezeptur vorgegeben wird. Diese Vorgabe kann beispielsweise mittels einer Datenverbindung von Steuereinrichtung und Pumpenvorrichtung erfolgen, wobei eine Fördermenge der jeweiligen Pumpen entsprechend der Rezeptur angepasst werden kann. Eine Bedienung des Pumpensystems wird durch die Speicherung der Rezeptur in der Datenbank dahingehend vereinfacht, dass die Rezeptur stets unmittelbar am Pumpensystem verfügbar ist und nicht erst beschafft oder gesucht werden muss. Weiter kann je nach verwendetem Komponentenmaterial die jeweils zugehörige Rezeptur einfach ausgewählt werden, ohne dass es einer weitergehenden Einstellung der Pumpenvorrichtung bzw. von Fördermengen der Pumpen bedarf. Vielmehr ist vorgesehen, dass mittels der Steuereinrichtung eine automatische Steuerung der Pumpeneinheit bzw. der Pumpe der Pumpeneinheit erfolgt, ohne dass sich eine Bedienperson näher mit den in den Rezepturen gemachten Angaben auseinandersetzen müsste. Eine Bedienung des Pumpensystems wird dadurch wesentlich vereinfacht, wobei dann auch weniger qualifizierte Bedienpersonen mit der Bedienung des Pumpensystems betraut werden können.

Die Pumpenvorrichtung kann eine Bedieneinrichtung aufweisen, mittels der eine Steuerung der Pumpenvorrichtung erfolgen kann, wobei die Steuervorrichtung zusammen mit der Bedieneinrichtung eine Steuereinheit ausbilden kann, mittels der eine Steuerung der Pumpeneinheit erfolgen kann.

Die Steuervorrichtung kann von der Pumpeneinheit örtlich beabstandet angeordnet sein, wobei ein Datenaustausch zwischen der Steuervorrichtung und den Bedieneinrichtungen erfolgen kann. Insbesondere dadurch, dass zusätzlich zur Pumpeneinheit eine Steuereinheit mit einer Steuervorrichtung vorgesehen sein kann, kann die Bedieneinrichtung mit der Steuervorrichtung über den Datenaustausch kommunizieren. Die Steuervorrichtung kann dabei jedoch nicht an der Pumpenvorrichtung, also den Pumpen oder der Bedieneinrichtung, angeordnet, sondern räumlich von der Pumpenvorrichtung trennbar sein, da keine mechanisch konstruktive Verbindung zwischen der Pumpenvorrichtung und der Steuervorrichtung bestehen muss. Unter einer räumlichen oder örtlichen Trennung wird eine Trennung der Gegenstände der Pumpenvorrichtung und der Steuervorrichtung verstanden, wobei durchaus eine Leitungsverbindung zwischen der Bedieneinrichtung und der Steuervorrichtung existieren kann. Dadurch, dass die Bedieneinrichtung und die Steuervorrichtung räumlich getrennt sein können, kann ein aus dem Stand der Technik bekannter Funktionsumfang einer Bedieneinrichtung zwischen der Bedieneinrichtung und der Steuervorrichtung aufgeteilt bzw. wesentlich verringert werden. Dies ist insbesondere dann von Vorteil, wenn eine Bedienperson unter schwierigen Umgebungsbedingungen, wie beispielsweise in einem Schiffsrumpf, arbeiten muss und kaum Gelegenheit hat die Pumpenvorrichtung bzw. die Bedieneinrichtung auf eine korrekte Funktion hin zu überwachen. Dies kann dann über die Steuervorrichtung erfolgen, die von der Pumpenvorrichtung örtlich unabhängig sein kann. Die Bedieneinheit kann dann auch einen gegenüber dem Stand der Technik geringeren Funktionalitätsumfang aufweisen, so dass zur Handhabung der Pumpenvorrichtung auch weniger gut ausgebildete Bedienpersonen eingesetzt werden können. Funktionalitäten, deren Bedienung einer höheren Qualifikation bedarf, werden dann von der Steuervorrichtung ausgeführt. Beispielsweise kann die Steuervorrichtung von der Bedieneinrichtung mit Daten über einen Füllstand der Flüssigkeitsspeicher oder ein Mischungsverhältnis bzw. ein Fördervolumen der jeweiligen Pumpen versorgt werden. Umgekehrt kann über die Steuervorrichtung eine erweitere Einstellung der Bedieneinrichtung erfolgen, beispielsweise eine Voreinstellung eines Mischungsverhältnisses.

Vorteilhaft können von der Steuereinheit Umgebungsparameter, Betriebszustände, Betriebsparameter und/oder Fehlermeldungen der Pumpenvorrichtung für einen Betriebszeitabschnitt kontinuierlich in der Datenbank gespeichert werden. Infolge eines Datenaustausches innerhalb der Steuereinheit ist es dann möglich, nicht nur die Pumpenvorrichtung bzw. die Pumpen zu steuern, sondern auch deren Betrieb zu überwachen und zu dokumentieren. Eine beispielsweise während eines Betriebs der Pumpenvorrichtung bzw. des Pumpensystems auftretende Verschlechterung eines Arbeitsergebnisses kann dann nachfolgend durch eine Durchsicht der gespeicherten Daten nachvollzogen werden bzw. eine Ursache für die Verschlechterung festgestellt werden.

Weiter kann die Steuereinrichtung Umgebungsparameter, Betriebszustände, Betriebsparameter und/oder Fehlermeldungen verarbeiten, wobei die Steuereinrichtung in der Datenbank eine Anpassung bzw. Änderung der Rezepturen vornehmen kann. Folglich können die in der Datenbank gespeicherten Rezepturen von der Steuereinrichtung verändert werden. Die unter Testbedingungen von Herstellern von Komponentenmaterial erarbeiteten Rezepturen können so an reale Umgebungsbedingungen während eines Betriebs des Pumpensystems angepasst werden. Gegebenenfalls ist es dann auch möglich, Mischungsverhältnisse für Komponentenmaterialien zu verwenden, die nach einer Rezeptur nicht zulässig wären, jedoch tatsächlich, unter bestimmten Bedingungen, ein ausgezeichnetes Arbeitsergebnis liefern. Die von den Rezepturen abweichenden Parameter können beispielsweise von einer Bedienperson versuchsweise erprobt und bei Erfolg oder Misserfolg entsprechend über die Steuereinrichtung in der Datenbank durch die Anpassung bzw. Änderung der vorhandenen Rezepturen gespeichert werden.

Mittels der Steuervorrichtung kann weiter ein Datenaustausch mit einem externen Netzwerk erfolgen. Unter einem externen Netzwerk wird ein Netzwerk verstanden, welches nicht dem Pumpensystem zugerechnet werden kann. Ein derartiges Netzwerk kann beispielsweise ein Intranet oder das Internet sein. Dabei ist es unerheblich wie die Kommunikation mit dem externen Netzwerk erfolgt. Dies kann sowohl über Netzwerkkabel als auch über eine drahtlose Funkverbindung erfolgen. Durch die Kommunikation mit dem externen Netzwerk ergeben sich zahllose Möglichkeiten zur Steuerung oder Beeinflussung der Steuervorrichtung. So kann die Steuervorrichtung ein Interface zur Bedienung der Steuervorrichtung in dem externen Netzwerk zur Verfügung stellen, das heißt die Steuervorrichtung kann über an dem externen Netzwerk angeschlossenen Computern unmittelbar über das externe Netzwerk bedient werden. Dabei besteht selbstverständlich die Möglichkeit, zur Beschränkung und/oder Freigabe von Rechten für die jeweiligen Bediener durch die Steuervorrichtung. Weiter können auch mehrere Pumpensysteme an das externe Netzwerk angeschlossen sein bzw. mit diesen verbunden sein, so dass eine Steuerung bzw. Bedienung dieser Pumpensysteme über das externe Netzwerk erfolgen kann. Darüber hinaus ist es möglich, dass die an das externe Netzwerk angeschlossenen Pumpensysteme bzw. das Pumpensystem über die jeweiligen Steuervorrichtungen Daten mit einem Hersteller des Pumpensystems austauschen. So kann der Hersteller eines defekten Pumpensystems im Servicefall unmittelbar auf Fehlermeldungen oder auch andere Systeminformationen bei Bedarf zurückgreifen. Weiter kann der Hersteller Softwareaktualisierungen der Steuervorrichtung vornehmen und die Funktion der Steuervorrichtung beeinflussen. Darüber hinaus können beim Hersteller aus den aus der oder den Steuervorrichtungen durch Übermittlung gewonnenen Daten Statistiken erstellt werden, die auf Fehlerhäufigkeiten oder auf ein Nutzerverhalten schließen lassen, woraus eine Optimierung des Pumpensystems abgeleitet werden kann.

Erfindungsgemäß wird die Datenbank in regelmäßigen Zeitabständen oder nach Anforderung von der Steuervorrichtung mit zumindest einer weiteren externen Datenbank synchronisiert. Insbesondere kann vorgesehen sein, dass die in der Datenbank befindlichen Rezepturen mit Rezepturen der externen Datenbank synchronisiert werden. So ist es dann möglich, von einem Hersteller von Komponentenmaterial geänderte Rezepturen in die Datenbank nach Anforderung oder auch automatisch zu übertragen. Dabei kann die Datenbank mit der weiteren externen Datenbank bei einem Hersteller des Pumpensystems oder bei einem Hersteller des Komponentenmaterials verbunden sein. So ist es dann auch möglich, dass die Notwendigkeit einer Bestellung von Komponentenmaterial an der Steuervorrichtung signalisiert wird, oder dass automatisch ein Bestellvorgang beim Hersteller ausgelöst wird. Optional kann die Datenbank auch mit einer Mehrzahl von weiteren, externen Datenbanken unterschiedlichster Hersteller verbunden sein. Umgekehrt können auch von einem Nutzer des Pumpensystems die in der Datenbank befindlichen Rezepturen geändert werden, wobei die geänderten Rezepturen dann wiederum an die weitere externe Datenbank übertragen werden können. Hersteller von Komponentenmaterial können so Kenntnisse darüber erlangen, innerhalb welcher realen Umgebungs- bzw. Nutzungsbedingungen das Komponentenmaterial tatsächlich eingesetzt wird bzw. werden kann.

Somit können Rezepturen mit Herstellerrezepturen von Mehrkomponentenmaterial einfach synchronisiert werden.

Die Steuereinrichtung kann auch einen Typ von Spritzpistole, Mischer und/oder Pumpenvorrichtung erkennen, wobei die Steuereinrichtung die Rezepturen unter Berücksichtigung des jeweiligen Typs korrigieren kann. So ist es möglich, die jeweilige Rezeptur an die gerade verwendete Spritzpistole, den Mischer und/oder die Pumpenvorrichtung optimal anzupassen. Gegebenenfalls kann die Pumpenvorrichtung auch einen oder mehrere Erhitzer aufweisen, die dann ebenfalls von der Steuereinrichtung bei der Änderung bzw. Anpassung der Rezeptur berücksichtigt werden können. Dadurch wird es möglich, eine Bedienperson noch weiter von möglichen Einstell- und Überwachungsaufgaben zu entlasten.

Darüber hinaus kann die Steuereinrichtung Umgebungsparameter, Betriebszustände, Betriebsparameter und/oder Fehlermeldungen unter Berücksichtigung der Rezepturen auf Plausibilität prüfen. So kann die Pumpenvorrichtung oder die Pumpeneinheit über beispielsweise einen Sensor zur Messung einer Umgebungstemperatur verfügen, wobei dann die Steuereinrichtung durch einen einfachen Ist-/Sollvergleich feststellen kann, ob bei der gemessenen Umgebungstemperatur das Komponentenmaterial verarbeitet bzw. gespritzt werden kann. Da die Rezepturen eine Reihe von Parametern und Bereichsangaben umfassen, die in einem Verhältnis zueinander stehen können, kann die Steuereinrichtung so eine Einstellung bzw. einen Betrieb der Pumpeneinheit im Rahmen der jeweiligen Rezeptur überprüfen.

Von der Bedienungseinrichtung können Umgebungsparameter, Betriebszustände, Betriebsparameter und/oder Fehlermeldungen der Pumpenvorrichtung an die Steuervorrichtung übermittelt werden, wobei die Steuervorrichtung die Umgebungsparameter, Betriebszustände, Betriebsparameter und/oder Fehlermeldungen weiterverarbeiten kann. So kann zum Beispiel ein Füllstand eines Flüssigkeitsspeichers der Pumpenvorrichtung von der Bedieneinrichtung kontinuierlich erfasst werden, wobei der Füllstand an die Steuervorrichtung dann übermittelt werden kann. Die Steuervorrichtung kann bei Unterschreiten eines festgelegten Füllstandes eine Reihe weiterer Verfahrensschritte ausführen. So kann die Steuervorrichtung eine Füllstandswarnung ausgeben oder auch eine Nachlieferung von Komponentenmaterial automatisch anfordern. Auch Betriebszustände oder Betriebsparameter können von der Steuervorrichtung dahingehend interpretiert werden, dass ein Wartungsintervall erreicht ist und eine Wartung durchgeführt werden muss. Fehlermeldungen können von der Steuervorrichtung zur automatischen Anforderung von Ersatzteilen genutzt werden.

Auch können von der Spritzpistole Umgebungsparameter, Betriebszustände, Betriebsparameter und/oder Fehlermeldungen der Spritzpistole an die Steuervorrichtung übermittelt werden, wobei die Steuereinrichtung die Rezepturen unter Berücksichtigung der jeweiligen Umgebungsparameter, Betriebszustände, Betriebsparameter und/oder Fehlermeldungen der Spritzpistole korrigieren kann. Folglich kann die Spritzpistole wie die Pumpenvorrichtung die vorgenannten Informationen bzw. Daten an die Steuervorrichtung übermitteln, derart, dass eine Korrektur der in der Datenbank gespeicherten Rezepturen bzw. der gerade verwendeten Rezeptur aufgrund der aktuellen Datenlage erfolgen kann. So kann die Spritzpistole eine Reihe von Sensoren aufweisen, mittels derer die vorbezeichneten Daten gewonnen werden können. So kann die Spritzpistole über einen Infrarottemperatursensor verfügen, mit dem eine Oberflächentemperatur einer zur beschichtenden Oberfläche kontinuierlich gemessen werden kann. Weitere Parameter, wie eine Umgebungstemperatur und eine Temperatur des zugeführten Komponentenmaterials können ebenfalls von der Spritzpistole bestimmt werden. Aus den gemessenen Temperaturdaten lässt sich ableiten, ob gemäß der verwendeten Rezeptur das Mehrkomponentenmaterial mit einem befriedigenden Arbeitsergebnis verspritzt werden kann bzw. ob entgegen der Rezeptur, das heißt bei von der Rezeptur abweichenden Umgebungsbedingungen dennoch ein befriedigendes Arbeitsergebnis erzielt werden kann. Insbesondere in diesem Fall kann die Steuervorrichtung bzw. die Steuereinrichtung die Rezeptur korrigieren oder auch eine benutzerspezifische Rezeptur speichern.

Folglich können Umgebungsparameter, Betriebszustände, Betriebsparameter und/oder Fehlermeldungen für einen Betriebszeitabschnitt auch kontinuierlich von der Steuervorrichtung gespeichert werden. Dadurch wird es möglich, die vorgenannten Daten zu dokumentieren und erst nach einer abschließenden Überprüfung eines Arbeitsergebnisses eine Rezeptur zu speichern oder zu korrigieren. Auch können dann eventuell fehlerhafte Arbeitsergebnisse oder Qualitätsschwankungen in den Arbeitsergebnissen anhand der gespeicherten Daten nachvollzogen werden, wodurch Rückschlüsse auf eventuell zu berücksichtigende Parameter gezogen werden können.

In einer weiteren Ausführungsform des Verfahrens kann die Steuervorrichtung eine schriftliche Dokumentation der Umgebungsparameter, Betriebzustände, Betriebsparameter und/oder Fehlermeldungen für einen Betriebszeitabschnitt erstellen. Insbesondere die schriftliche Dokumentation kann im Falle von Mängel- oder Garantieansprüchen gegebenenfalls als ein Beweis für eine fehlerfreie Arbeitsausführung herangezogen werden.

Darüber hinaus können von der Bedieneinrichtung und/oder der Steuervorrichtung Umgebungsparameter, Betriebszustände, Betriebsparameter und/oder Fehlermeldungen der Pumpenvorrichtung an die Spritzpistole übermittelt werden. Durch die Übermittlung der vorgenannten Daten ist es möglich, auch eine automatische Einstellung der Spritzpistole, beispielsweise über motorisch angetriebene Ventile oder über eine motorische Düseneinstellung vorzunehmen. Darüber hinaus können die vorgenannten Daten auch an der Spritzpistole angezeigt werden, so dass eine Bedienperson unmittelbar Kenntnis über beispielsweise eine Fehlermeldung oder einen Füllstand eines Flüssigkeitsspeichers erhält. Dies ist insbesondere dann von Vorteil, wenn die Bedienperson mit der Spritzpistole in einem großen Abstand von der Pumpenvorrichtung mit der Spritzpistole arbeitet.

Insbesondere Statusmeldungen, wie beispielsweise ein Druck oder eine Temperatur, der Steuervorrichtung können an die Bedieneinrichtung und/oder die Spritzpistole übertragen und dort angezeigt werden. So ist es dann möglich, eine Bedienperson unmittelbar an der Spritzpistole oder auch an der Pumpenvorrichtung mit eventuell für die Bedienperson relevanten Informationen zur Durchführung der Arbeitsaufgabe zu versorgen.

Mittels der Datenbank der Steuervorrichtung kann eine aktuelle Dokumentation, wie beispielsweise ein Schaltplan oder auch Handbücher, des Pumpensystems zur Verfügung gestellt werden. So ist es dann nicht mehr notwendig, ein druckschriftliches Handbuch oder Schaltpläne zur Verfügung zu stellen. Vielmehr kann die Dokumentation dann auch einfach aktualisiert und an verschiedensten Arbeitsorten von der Steuervorrichtung abgerufen bzw. angezeigt werden.

Besonders vorteilhaft ist es, wenn der Datenaustausch zwischen der Steuervorrichtung und der Bedieneinrichtung drahtlos erfolgen kann. So kann dann auf eine Leitungsverbindung zwischen der Bedieneinrichtung und der Steuervorrichtung vollständig verzichtet werden. Eine drahtlose Verbindung kann beispielsweise durch eine Funkverbindung innerhalb eines gängigen Frequenzbandes einfach hergestellt werden. So wird es dann auch möglich einen Datenaustausch mit der Bedieneinrichtung zu gewährleisten, wenn diese an einem schwer zugänglichen Ort aufgestellt wurde. Beispielsweise kann dann auch mit der Steuervorrichtung leicht eine Mehrzahl von Pumpenvorrichtungen überwacht werden. Die Steuervorrichtung kann dann auf einem beispielsweise Firmengelände innerhalb eines Bürogebäudes positioniert werden, wobei mit der Steuervorrichtung verschiedene, auf dem Firmengelände befindliche Pumpenvorrichtungen über den Datenaustausch überwacht und gesteuert werden können. Auch ist es so dann möglich, einen Einsatz der jeweiligen Pumpenvorrichtungen, deren Auslastung, eine aktuelle örtliche Position, und ein Betriebsverhalten zu überwachen und statistisch auszuwerten.

Insbesondere Steuerbefehle der Bedieneinrichtung können von Steuerbefehlen der Steuervorrichtung überlagert werden. So kann dann sichergestellt werden, dass eventuelle Bedienungsfehler einer Bedienperson bei der Bedienung der Bedieneinrichtung von der Steuervorrichtung korrigiert werden können. Beispielsweise kann dann auch eine Aktualisierung einer Software der Bedieneinrichtung automatisch von der Steuervorrichtung ausgeführt werden. Auch ist es denkbar, ein mögliches Mischungsverhältnis von Komponentenmaterialen über die Steuervorrichtung auf einen Bereich zu begrenzen, so dass eine Bedienperson nur Einstellungen innerhalb dieses Bereiches vornehmen kann.

Von der Steuervorrichtung können Steuerbefehle und/oder Betriebeinstellungen für die Pumpenvorrichtung an die Bedieneinrichtung übermittelt werden. Die Steuervorrichtung kann folglich Einstellungen, wie Mischungsverhältnisse, Drücke etc. unmittelbar an die Bedieneinrichtung der Pumpenvorrichtung übermitteln, so dass eine Bedienperson diese Einstellungen an der Bedieneinrichtung nicht mehr vornehmen muss. Auch kann im Falle eines Roboters zur Handhabung der Spritzpistole ein Steuerbefehl zur zum Beispiel Inbetriebsetzung der Pumpenvorrichtung an die Bedieneinrichtung weitergegeben werden.

Die Steuervorrichtung kann anhand geänderter Umgebungsparameter, Betriebszustände und/oder Betriebsparameter die Steuerbefehle und/oder Betriebseinstellungen kontinuierlich anpassen. Die von der Steuervorrichtung an die Bedieneinrichtung übermittelten Steuerbefehle können in Abhängigkeit der von der Bedieneinrichtung an die Steuervorrichtung übermittelten Daten angepasst werden. Diese Anpassung kann bereits schon im Rahmen einer einfachen Regelung mit einem Regelglied erfolgen. Die Regelung kann dabei alleine anhand von beispielsweise einem einzelnen Umgebungsparameter durchgeführt werden, wobei auch eine vergleichsweise komplexe Regelung mit einer Vielzahl von gleichzeitig erfassten Daten durchgeführt werden kann.

In einer einfachen Ausführungsform des Verfahrens kann die Bedieneinrichtung mittels der Steuervorrichtung konfiguriert werden. Das heißt die Bedieneinrichtung kann mittels der Steuervorrichtung so voreingestellt werden, dass eine Bedienperson keine weitergehende Einstellung der Bedieneinrichtung mehr vornehmen muss.

Mittels der Steuervorrichtung kann in Abhängigkeit der Umgebungsparameter, Betriebszustände, Betriebsparameter und/oder Fehlermeldungen eine Statusmeldung an ein externes Netzwerk versendet werden. Eine derartige Statusmeldung kann beispielsweise eine Fehlermeldung sein, die an einen Hersteller des Pumpensystems versendet wird. Der Hersteller wird damit frühzeitig über einen möglichen Ausfall des Pumpensystems bzw. von Komponenten des Pumpensystems in Kenntnis gesetzt und kann anhand der übermittelten Statusmeldungen, ohne vor Ort zu sein, einen Fehler eingrenzen oder erkennen.

Die Pumpeneinheit kann zumindest eine weitere Pumpenvorrichtung umfassen, wobei mittels der Steuereinheit eine Steuerung der Pumpeneinheit mit den Pumpenvorrichtungen erfolgen kann. Folglich kann die Pumpeneinheit zumindest vier Pumpen und zwei Bedieneinrichtungen, umfassen die dann jeweils einem Pumpenpaar zugeordnet sind. Die zwei Bedieneinrichtungen bilden dann zusammen mit der Steuervorrichtung eine Steuereinheit. Mittels der Steuervorrichtung können die Bedieneinrichtungen jeweils für sich alleine gesteuert werden bzw. es kann ein Datenaustausch zwischen den Bedieneinrichtungen und der Steuervorrichtung erfolgen. Die Steuereinheit kann somit zur Betriebsbeeinflussung der Pumpeneinheit dienen. Insgesamt kann so ein modularer Aufbau einer Pumpeneinheit dadurch ermöglicht werden, dass die Steuervorrichtung eine Steuerung sämtlicher Pumpenvorrichtungen ermöglicht. Gegenüber dem bekannten Stand der Technik ist es dann nicht mehr erforderlich, Pumpeneinheiten, die eine Vielzahl von Pumpen aufweisen sollen, aus einzelnen Pumpen auszubilden. Vielmehr kann die Pumpeneinheit aus einer Mehrzahl von standardisierten Pumpenvorrichtungen mit jeweils einer Bedieneinrichtung ausgebildet sein. Die Pumpenvorrichtungen können daher auch autonom betrieben werden. Lediglich die Steuervorrichtung kann mit sämtlichen Bedieneinrichtungen der Pumpenvorrichtungen verbunden sein, und steuert diese je nach Bedarf dann in Art einer überlagerten Steuerung. Kommt es nun zu einem Ausfall einer Pumpe, bedeutet dies, dass die Pumpeneinheit weiter betrieben werden kann, da die betroffene Pumpenvorrichtung einfach ausgewechselt werden kann, ohne dass es einer Stilllegung der übrigen Pumpenvorrichtungen sowie der Steuervorrichtung bedarf. Die defekte Pumpenvorrichtung kann dann räumlich unabhängig von der Pumpeneinheit repariert und für einen Austausch bereit gehalten werden.

Weiter ist es denkbar, dass die Steuervorrichtung bei Bedarf eine Pumpenvorrichtung selbsttätig außer Betrieb nimmt und eine als Reserve vorgehaltene Pumpenvorrichtung in Betrieb setzt. Auch kann ein Konstruktionsaufwand zum Bau eines derartigen Pumpensystems bzw. einer Pumpeneinheit wesentlich verringert werden, da standardisierte Pumpenvorrichtungen, die bereits über eine autonome Steuerung in Form der Bedieneinrichtung verfügen, eingesetzt werden können. Auch ein flexibler Umbau des Pumpensystems wird dadurch möglich, dass die Steuervorrichtung lediglich an eine veränderte Anzahl von Pumpenvorrichtungen angepasst werden muss. Die Steuervorrichtung kann dabei so ausgebildet sein, dass eine beliebige Anzahl von Pumpenvorrichtungen mittels der Steuervorrichtung gesteuert werden kann. Die Steuereinheit kann dann auch über die jeweiligen Bedieneinrichtungen einzelne Pumpen steuern, so dass es für eine Funktion des Pumpensystems prinzipiell unerheblich ist, ob eine bestimmte Pumpe einer bestimmten Pumpenvorrichtung zugehörig ist.

Die Pumpen der Pumpenvorrichtung bzw. Pumpenvorrichtungen können von der Steuervorrichtung voneinander unabhängig angesteuert werden. Somit wird es möglich, bei einer Pumpeneinheit mit mehreren Pumpenvorrichtungen auch Pumpen verschiedener Pumpenvorrichtungen zur Mischung eines Mehrkomponentenmaterials gleichzeitig zu betreiben. So kann dann beispielsweise eine erste Pumpe einer ersten Pumpenvorrichtung zusammen mit einer ersten Pumpe einer weiteren Pumpenvorrichtung betrieben werden, wobei eine weitere Pumpe der ersten Pumpenvorrichtung und eine weitere Pumpe der weiteren Pumpenvorrichtung nicht betrieben werden.

Vorteilhaft kann die Steuervorrichtung ein Spülen von Pumpen, Mischer und/oder Spritzpistolen der Pumpenvorrichtung bzw. Pumpenvorrichtungen parallel veranlassen und durchführen. Es ist so möglich, parallel zu einem Verspritzen von Mehrkomponentenmaterial nicht benötigte Leitungsstränge bzw. Förderleitungen, Pumpen, Mischer und Spritzpistolen automatisch zu spülen und für eine sofortige Weiterverwendung freizugeben. Das Verspritzen des Mehrkomponentenmaterials muss durch den Spülvorgang dann nicht unterbrochen werden, wodurch ein erheblicher Zeitgewinn zur Handhabung des Pumpensystems erzielt werden kann. Insofern kann ein Spülen innerhalb eins Zeitabschnitts nicht genutzter Pumpen, Mischer und/oder Spritzpistolen der Pumpenvorrichtungen automatisch erfolgen.

In einer Ausführungsform des Verfahrens kann mittels der Steuervorrichtung ein Datenaustausch bzw. eine Kommunikation mit einem Roboter erfolgen. Dies ist insofern vorteilhaft, wenn das Pumpensystem zusammen mit einem Roboter zur Beschichtung von Oberflächen eingesetzt wird bzw. die Spritzpistole von dem Roboter gehandhabt wird. Der Roboter kann dann mit den ihm zur Verfügung stehenden Kommunikationsmitteln mit der Steuervorrichtung derart kommunizieren, dass eine Funktion des Pumpensystems von dem Roboter gesteuert wird bzw. an eine Funktion des Roboters angepasst ist.

Das erfindungsgemäße Pumpensystem umfasst eine Pumpeneinheit zum Ausgeben von Mehrkomponentenmaterial unter Druck mit einer Spritzpistole, wobei die Pumpeneinheit eine Pumpenvorrichtung, einen Mischer und eine Spritzpistole umfasst, wobei die Pumpenvorrichtung zumindest zwei Pumpen zur Förderung von Komponentenmaterial und jeweils zugeordnete Flüssigkeitsspeicher zur Speicherung von Komponentenmaterial aufweist, wobei das Pumpensystem eine Steuervorrichtung aufweist, wobei die Steuervorrichtung eine Steuereinrichtung zur Steuerung der Pumpeneinheit und eine Datenbank umfasst, wobei in der Datenbank Rezepturen zur Mischung von Mehrkomponentenmaterialien gespeichert sind, wobei die Datenbank in regelmäßigen Zeitabständen oder nach Anforderung von der Steuervorrichtung mit zumindest einer weiteren externen Datenbank synchronisierbar ist, wobei mittels der Steuereinrichtung die Pumpeneinheit in Abhängigkeit einer Rezeptur eine steuerbar ist.

Hinsichtlich der vorteilhaften Wirkungen des erfindungsgemäßen Pumpensystems wird auf die Vorteilsbeschreibung des erfindungsgemäßen Verfahrens verwiesen.

Die Pumpenvorrichtung kann eine Bedieneinrichtung zur Steuerung der Pumpenvorrichtung aufweisen, wobei die Steuervorrichtung zusammen mit der Bedieneinrichtung eine Steuereinheit zur Steuerung der Pumpeneinheit ausbilden kann, wobei mittels der Steuereinheit die Pumpeneinheit mit der Pumpenvorrichtung steuerbar ist.

Die Steuervorrichtung kann von der Pumpeneinheit örtlich beabstandet angeordnet sein.

Besonders vorteilhaft, ist es wenn die Steuervorrichtung zum Datenaustausch mit einem externen Netzwerk ausgebildet ist.

Die Pumpeneinheit kann zumindest eine weitere Pumpenvorrichtung umfassen, wobei die weitere Pumpenvorrichtung mit der Steuervorrichtung verbunden sein kann. Die Pumpenvorrichtungen können im Wesentlichen identisch ausgebildet sein. Zwar ist es auch denkbar, Pumpenvorrichtungen zu verwenden, die jeweils eine unterschiedliche Anzahl von Pumpen aufweisen, jedoch ist es aus ökonomischer Sicht vorteilhafter identische Pumpenvorrichtungen zu verwenden. Das Pumpensystem muss dann nicht mehr individuell für einen Kunden konstruiert bzw. konfiguriert werden, sondern es können ohnehin standardmäßig vorhandene Pumpenvorrichtungen, die beispielsweise auch für einen mobilen Einsatz vorgesehen sein können, zur Ausbildung eines stationären Pumpensystems verwendet werden. Neben einer einfacheren Austauschbarkeit der Pumpenvorrichtungen werden bei einer Verwendung identischer Pumpenvorrichtungen die Kosten zur Ausbildung des Pumpensystems erheblich verringert.

Es kann vorgesehen sein, dass die Steuervorrichtung einen gegenüber der Bedieneinrichtung erweiterten Regel-, Steuer- und/oder Funktionalitätsumfang aufweist. Demnach kann dann einer Bedienperson an der Bedieneinrichtung ein eingeschränkter Regel-, Steuer- und/oder Funktionalitätsumfang zur Verfügung gestellt werden, was eine Bedienung der Pumpeneinheit bzw. der Pumpenvorrichtung wesentlich vereinfacht. Auch muss dann die Bedienperson weniger detaillierte fachliche Kenntnisse aufweisen und eventuelle Fehlbedienungen können sicher ausgeschlossen werden. So kann vorgesehen sein, der Bedienperson lediglich vier bis zehn Schalter an der Bedieneinrichtung zur Bedienung der Pumpenvorrichtung bzw. der Pumpeneinheit sowie eine einfache Anzeigevorrichtung zur Verfügung zu stellen. Weitere Funktionalitäten können dann über die Steuervorrichtung bedient werden, wobei die Steuervorrichtung dann den vollen Funktionalitätsumfang der Pumpeneinheit regeln bzw. steuern kann. Die Steuervorrichtung kann demnach auch von einer Bedienperson bedient werden, die vergleichsweise umfangreiche fachliche Kenntnisse aufweist. Die Trennung von Bedieneinrichtung und Steuervorrichtung ist insbesondere dann von Vorteil, wenn die Pumpeneinheit mehrere Pumpenvorrichtungen aufweist, die jeweils von unterschiedlichen Bedienpersonen bedient werden.

Die Bedieneinrichtung kann mit einem Anzeigeelement und Bedienelementen ausgebildet sein. Das Anzeigeelement der Bedieneinrichtung kann beispielsweise ein einfaches LCD- und/oder LED-Display sein, das gegenüber dem Anzeigeelement der Steuervorrichtung vergleichsweise klein ist. Als Bedienelemente können vier bis zehn Schalter oder Stellelemente zur Bedienung der Grundfunktion der Pumpenvorrichtung vorgesehen sein.

So kann die Steuervorrichtung als eine Einrichtung zur Datenverarbeitung mit einem Anzeigeelement und Bedienelementen ausgebildet sein. Die Steuervorrichtung kann demnach ein standardisierter Computer, wie beispielsweise ein Personalcomputer mit den üblichen Ein- und Ausgabemitteln, wie Bildschirm und Tastatur, sein. Auch ist es möglich, dass die Steuervorrichtung speziell ausgebildete Anzeigeelemente, wie ein LCD- oder LED-Display und Bedienelemente, wie eine Reihe von Schaltern und Stellelementen aufweist.

In einer Ausführungsform kann auch vorgesehen sein, dass die Steuervorrichtung als ein Mobiltelefon ausgebildet ist. Wenn die Steuervorrichtung insbesondere ein sogenanntes Smartphone ist, kann auf dem Mobiltelefon leicht eine Software zur Steuerung der Bedieneinrichtung installiert werden. Auch ist es dann möglich, eine einfache Verbindung zwischen der Steuerverbindung und Bedieneinrichtung über Bluetooth, W-LAN, GSM, GPRS, UMTS, LTN oder andere Standards zur Datenübertragung herzustellen. Die Steuervorrichtung kann dann auch tragbar bzw. mobil mitgeführt werden. Auch bedarf es keiner besonderen Ausbildung der Steuervorrichtung, da derartige Mobiltelefone vergleichsweise kostengünstig erhältlich sind. Alternativ ist es selbstverständlich möglich, als Steuervorrichtung einen sogenannten Tabletcomputer oder auch ein Notebook oder Netbook zu verwenden.

Im Bereich der Spritztechnik ist es weiter besonders vorteilhaft, wenn die Bedieneinrichtung und/oder die Steuervorrichtung ATEX-konform ausgebildet sind. Diese können dann jeweils als druckgekapselte Einheit nach den ATEX-Leitlinien zum Explosionsschutz gemäß Produktrichtlinie 94/9/EG und Betriebsrichtlinie 1999/92/EG ausgebildet sein. So kann ein besonders sicherer Betrieb des Pumpensystems gewährleistet werden.

In einer einfachen Ausführungsform kann die Pumpenvorrichtung alleine zwei Pumpen aufweisen. Prinzipiell kann zwar die Pumpenvorrichtung auch mehr als zwei Pumpen aufweisen, jedoch weist regelmäßig eine überwiegende Anzahl von Pumpenvorrichtungen lediglich zwei Pumpen auf. Wenn die Pumpeneinheit aus einer Mehrzahl von Pumpenvorrichtungen gebildet ist, können dann zur Ausbildung der Pumpeneinheit besonders gängige Pumpenvorrichtungen verwendet werden, die daher auch besonders kostengünstig erhältlich sind.

Auch kann die Pumpeneinheit einen weiteren Mischer und eine weitere Spritzpistole umfassen. So kann eine aus mehreren Pumpenvorrichtungen gebildete Pumpeneinheit auch von mehreren Bedienpersonen gleichzeitig genutzt werden. Weiter wird dadurch auch ein schneller Wechsel zwischen Spritzpistolen ermöglicht, insbesondere wenn eine Spritzpistole mit einem Mischer, mit einer ersten Farbe, und eine Spritzpistole mit einem Mischer mit einer zweiten Farbe genutzt wird. Ebenso kann eine nicht genutzte Spritzpistole mit einem Mischer auch während einer parallelen Nutzung einer weiteren Spritzpistole beispielsweise gespült werden.

So kann vorgesehen sein, dass jeder Pumpenvorrichtung jeweils ein Mischer und eine Spritzpistole zugeordnet sind. Alternativ ist es auch möglich, mehr als zwei Pumpenvorrichtung einer Spritzpistole und einem Mischer zuzuordnen, wobei bei einer anderen Anzahl von Pumpenvorrichtungen diesen ebenfalls eine Spritzpistole und ein Mischer zugeordnet sein können.

Die Pumpeneinheit kann alleine eine Pumpe zur Förderung einer Härterkomponente aufweisen. Demnach kann eine Pumpenvorrichtung vorgesehen sein, bei der eine einzelne Pumpe zur Förderung der Härterkomponente genutzt wird. Die weitere Pumpenvorrichtung weist dann keine Pumpe zur Förderung einer Härterkomponente auf. Je nach Kombination von Pumpenvorrichtung und Mischer kann die Härterkomponente von der einen, einzelnen Pumpe den Komponentenmaterialien, die von den übrigen Pumpen gefördert werden können, zugemischt werden. Somit muss nicht jede Pumpenvorrichtung eine Pumpe zur Förderung eines Härterkomponentenmaterials aufweisen, wodurch sich Pumpen einsparen lassen.

Weitere vorteilhafte Ausführungsformen der Vorrichtung ergeben sich aus den Merkmalsbeschreibungen der auf den Verfahrensanspruch 1 rückbezogenen Unteransprüche.

Nachfolgend werden bevorzugte Ausführungsformen der Erfindung unter Bezugnahme auf die beigefügte Zeichnungen näher erläutert.

Es zeigen:
- **Fig. 1**: eine schematische Darstellung einer ersten Ausführungsform eines Pumpensystems;
- **Fig. 2**: eine schematische Darstellung einer zweiten Ausführungsform eines Pumpensystems;
- **Fig. 3**: eine schematische Darstellung einer dritten Ausführungsform eines Pumpensystems;
- **Fig. 4**: eine schematische Darstellung einer Ausführungsform einer Steuereinheit.

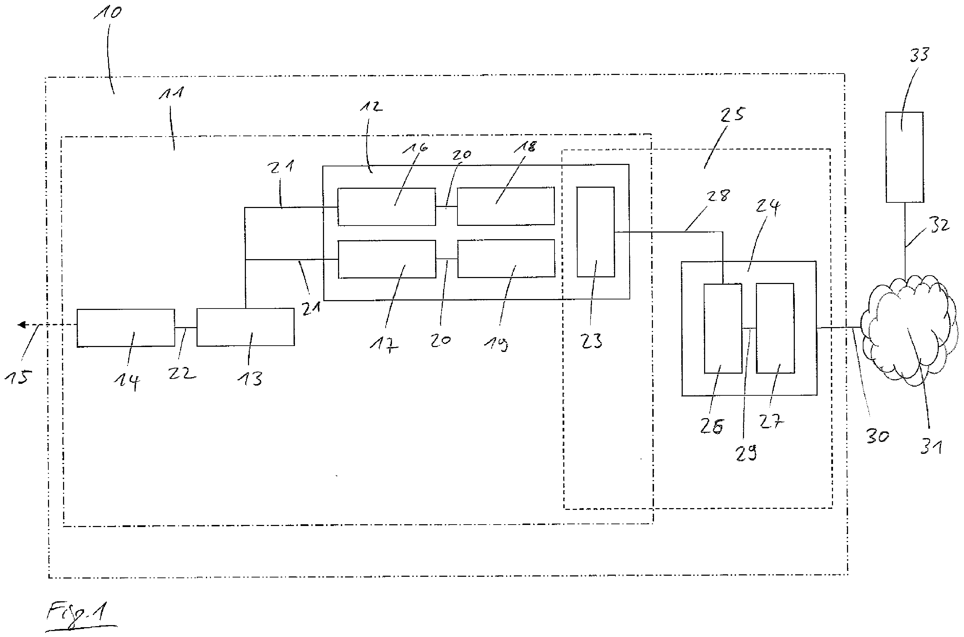

Die **Fig. 1** zeigt eine schematische Darstellung einer ersten Ausführungsform eines Pumpensystems 10. Das Pumpensystem 10 umfasst eine Pumpeneinheit 11, die aus einer Pumpenvorrichtung 12 zur Förderung von Komponentenmaterial, einem Mischer 13, und einer Spritzpistole 14 gebildet ist. Mit der Spritzpistole 14 kann ein im Mischer 13 aus den Komponentenmaterialen gemischtes Mehrkomponentenmaterial auf eine Oberfläche gesprüht bzw. gespritzt werden, wie dies hier mit dem Pfeil 15 angedeutet ist. Die Pumpenvorrichtung 12 umfasst ihrerseits eine erste Pumpe 16 und eine weitere Pumpe 17 sowie einen ersten Flüssigkeitsspeicher 18 und einen weiteren Flüssigkeitsspeicher 19 zur Aufnahme von jeweils flüssigem Komponentenmaterial. Die Flüssigkeitsspeicher 18 und 19 sind jeweils über Medienleitungen 20 mit den Pumpen 16 bzw. 17 verbunden, wobei die Pumpen 16 und 17 über Medienleitungen 21 mit dem Mischer 13, und dieser wiederum über eine Medienleitung 22 mit der Spritzpistole 14 verbunden ist. Die Pumpen 16 und 17 sind als pneumatisch angetriebene Hubkolbenpumpen ausgebildet, so dass von den Pumpen 16 und 17 aus den Flüssigkeitsspeichern 18 bzw. 19 Komponentenmaterialien angesaugt und unter Druck über die Medienleitungen 21 zum Mischer 13 gefördert werden können. Im Mischer 13 erfolgt eine innige Mischung der Komponentenmaterialien und eine Weiterleitung des so ausgebildeten Mehrkomponentenmaterials über die Medienleitung 22 zur Spritzpistole 14. Die Spritzpistole 14 weist einen hier nicht dargestellten Druckluftanschluss auf, so dass das Mehrkomponentenmaterial mittels Druckluft ausgegeben bzw. versprüht werden kann. Darüber hinaus weist die Pumpenvorrichtung 12 eine Bedieneinrichtung 23 auf, über die eine Steuerung der Pumpenvorrichtungen 12 bzw. der Pumpeneinheit 11 auf einfache Weise erfolgen kann. Die Bedieneinrichtung 23 stellt einer Bedienperson Basisfunktionen zur Bedienung der Pumpenvorrichtung 12 zur Verfügung.

Das Pumpensystem 10 umfasst weiter eine Steuervorrichtung 24 zur Steuerung der Bedieneinrichtung 23 bzw. der Pumpenvorrichtung 12. Die Steuervorrichtung 24 bildet zusammen mit der Bedieneinrichtung 23 eine Steuereinheit 25 aus. Die Steuervorrichtung 24 selbst weist eine Steuereinrichtung 26 sowie eine Datenbank 27 auf. Die Steuervorrichtung 24 bzw. die Steuereinrichtung 26 ist über eine hier schematisch dargestellte Datenverbindung 28 zum Datenaustausch mit der Bedieneinrichtung 23 verbunden. Weiter ist die Steuereinrichtung 26 mit der Datenbank 27 über eine Datenverbindung 29 zum Datenaustausch verbunden. Darüber hinaus ist die Steuervorrichtung 24 über eine Datenverbindung 30 mit einem externen Netzwerk 31, wie zum Beispiel das Internet, verbunden. An das externe Netzwerk 31 ist über eine Datenverbindung 32 eine weitere Datenbank 33 angeschlossen. Die weitere Datenbank 33 ist beispielsweise eine Datenbank des Herstellers des Pumpensystems 10 oder des Herstellers des Komponentenmaterials.

Die Steuervorrichtung 24 ist vorzugsweise als ein hier nicht näher dargestelltes Mobiltelefon ausgebildet, so dass es sich bei den Datenverbindungen 28 und 30 um drahtlose Funkverbindungen handelt. Die Steuereinrichtung 26 stellt somit einen Prozessor bzw. Datenverarbeitungseinrichtung des Mobiltelefons und die Datenbank 27 einen Speicher des Mobiltelefons dar. Die Steuervorrichtung 24 weist eine gegenüber der Bedieneinrichtung 23 erweiterte Funktionalität auf. So können neben den mit der Bedieneinrichtung 23 nutzbaren Funktionalitäten mit der Steuervorrichtung 24 noch darüber hinausgehende Funktionalitäten der Pumpenvorrichtung 12 bzw. der Pumpeneinheit 11 genutzt werden. Insbesondere durch einen Datenaustausch zwischen der Bedieneinrichtung 23 und der Steuervorrichtung 24 kann auch eine Überwachung der Pumpenvorrichtung 12 bzw. eine Dokumentation von Umgebungsparametern, Betriebszuständen, Betriebsparmetern und/oder Fehlermeldungen der Pumpenvorrichtung 12 bzw. Pumpeneinheit 11 erfolgen. So wird es möglich, dass die gewonnenen Daten einerseits zur veränderlichen Steuerung der Pumpenvorrichtung 12 durch die Steuervorrichtung 24 in Art einer Regelung genutzt werden können und andererseits die Dokumentation der Daten zur Qualitätssicherung und nachträglichen Nachvollziehbarkeit eines Arbeitsergebnisses zu nutzen.

Insbesondere die Datenbank 27 enthält Rezepturen von Herstellern von Komponentenmaterial, mittels derer eine Steuerung der Bedieneinrichtung 23 bzw. der Pumpenvorrichtung 12 erfolgen kann. So kann dann mittels der Steuervorrichtung 24 beispielsweise ein Mischungsverhältnis der Pumpen 16 und 17 durch Variation einer Fördermenge der Pumpen 16 und 17 über die Bedieneinrichtung 23 eingestellt werden. Eine vor Ort befindliche Bedienperson der Spritzpistole 14 ist dann nicht mehr gezwungen unmittelbar auf eine Rezeptur zurückzugreifen und die erforderlichen Einstellungen an der Pumpenvorrichtung 12 bzw. Bedieneinrichtung 23 vorzunehmen. Darüber hinaus können mögliche Fehlermeldungen der Pumpenvorrichtung 12 an die Steuervorrichtung 24 übermittelt werden, wobei die Steuervorrichtung 24 diese Fehlermeldungen auch an das externe Netzwerk 31 weitergeben kann. Die Rezepturen, Dokumentationen, Handbücher etc. können in der weiteren Datenbank 33 vorgehalten werden und in regelmäßigen Abständen mit den in der Datenbank 27 vorgehaltenen Daten synchronisiert werden. Auch ist es so möglich Fehlermeldungen unmittelbar, beispielsweise per E-Mail, an einen Hersteller des Pumpensystems 10 zu senden, um so gegebenenfalls eine Servicedienstleistung zu initiieren. Darüber hinaus besteht die Möglichkeit, an der Steuervorrichtung 24, und gegebenenfalls auch an der Bedieneinrichtung 23 die Rezepturen zu ändern bzw. anzupassen bzw. neue Rezepturen in der Datenbank 27 zu speichern. Diese geänderten Rezepturen können weitere Informationen über die tatsächlich gegebenen Arbeitsbedingungen, wie beispielsweise Temperaturen, Luftfeuchte etc. enthalten, so dass von der Steuervorrichtung 24 diese Daten an die weitere Datenbank 33 zur Aktualisierung bzw. Anpassung der bei Herstellern von Komponentenmaterial befindlichen Rezepturen genutzt werden kann.

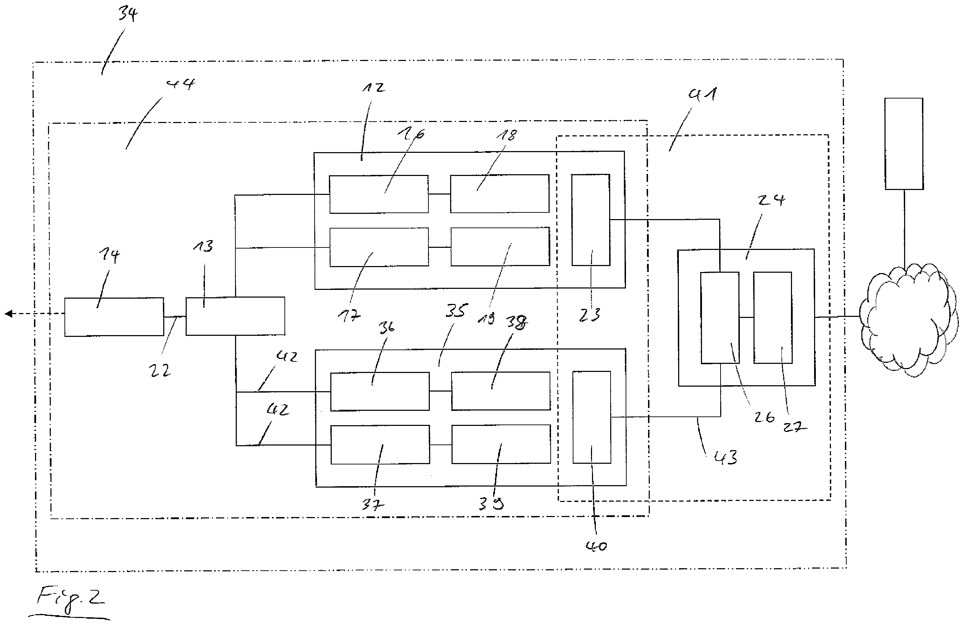

Die **Fig. 2** zeigt eine zweite Ausführungsform eines Pumpensystems 34, welches im Unterschied zu dem in **Fig.1** gezeigten Pumpensystem eine weitere Pumpenvorrichtung 35 aufweist. Die weitere Pumpenvorrichtung 35 verfügt über eine erste Pumpe 36 und eine weitere Pumpe 37 sowie einen ersten Flüssigkeitsspeicher 38 und einen weiteren Flüssigkeitsspeicher 39 und eine Bedieneinrichtung 40. Die Bedieneinrichtungen 23 und 40 bilden nunmehr zusammen mit der Steuervorrichtung 24 eine Steuereinheit 41 aus. Auch ist die weitere Pumpenvorrichtung 35 mit dem Mischer 13 und der Spritzpistole 14 über Medienleitungen 42 und 22 verbunden. Darüber hinaus ist die Steuereinrichtung 26 über eine Datenverbindung 43 mit der Bedieneinrichtung 40 drahtlos verbunden. Mittels der Steuervorrichtung 24 ist es nun möglich die Pumpenvorrichtung 12 und die Pumpenvorrichtung 35 gleichzeitig zu steuern und zusammen mit dem Mischer 13 und der Spritzpistole 14 zu einer Pumpeneinheit 44 zusammenzuführen. Die Pumpenvorrichtung 12 und die Pumpenvorrichtung 35 sind im Wesentlichen identisch ausgebildet, so dass bei einem Ausfall einer Pumpenvorrichtung 12 oder 35 diese einfach ausgewechselt werden kann, ohne dass die Pumpeneinheit 44 vollständig außer Betrieb genommen werden müsste. Auch ist es möglich über die Steuervorrichtung 24 die Pumpen 16, 17 und 36, 37 vollkommen unabhängig voneinander zu betreiben und zum Mischen von Mehrkomponentenmaterial in beliebigen Kombinationen zusammenzuschalten.

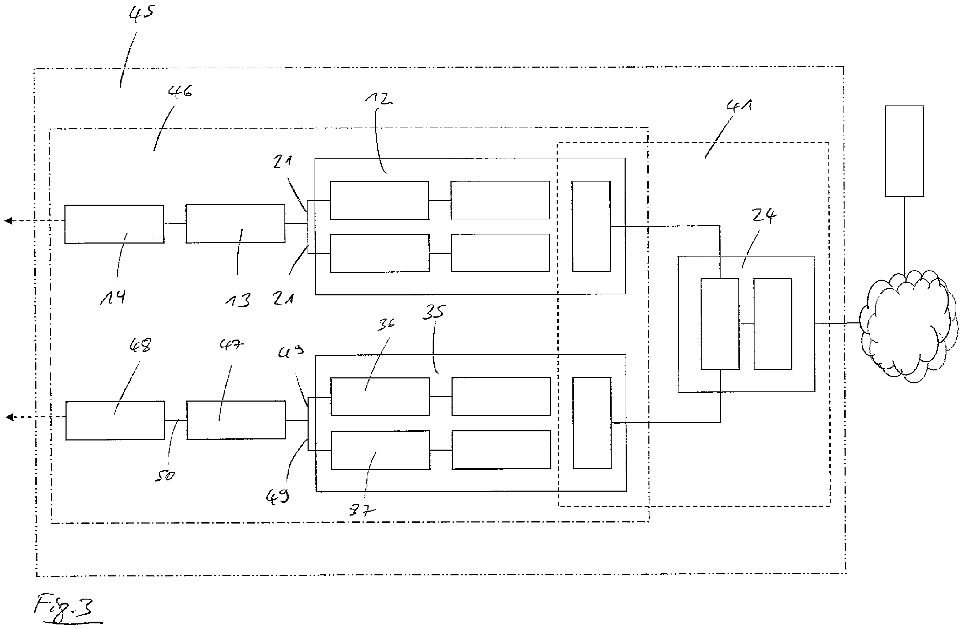

Die **Fig. 3** zeigt eine schematische Darstellung einer dritten Ausführungsform eines Pumpensystems 45. Im Unterschied zu dem in **Fig. 2** dargestellten Pumpensystem verfügt hier eine Pumpeneinheit 46 über einen weiteren Mischer 47 und eine weitere Spritzpistole 48, wobei die erste Pumpe 36 und die weitere Pumpe 37 über Medienleitungen 49 mit dem Mischer 47, und der Mischer 47 über eine Medienleitung 50 mit der Spritzpistole 48 verbunden ist. Die Pumpenvorrichtungen 12 und 35 können dann auch vollkommen räumlich voneinander getrennt verwendet werden, wobei die Steuervorrichtung 24 ebenfalls örtlich und räumlich von den Pumpenvorrichtungen 12 und 35 getrennt aufgestellt sein kann. Dennoch ist es möglich die Pumpenvorrichtungen 12 und 35 gleichzeitig zu steuern und zu überwachen.

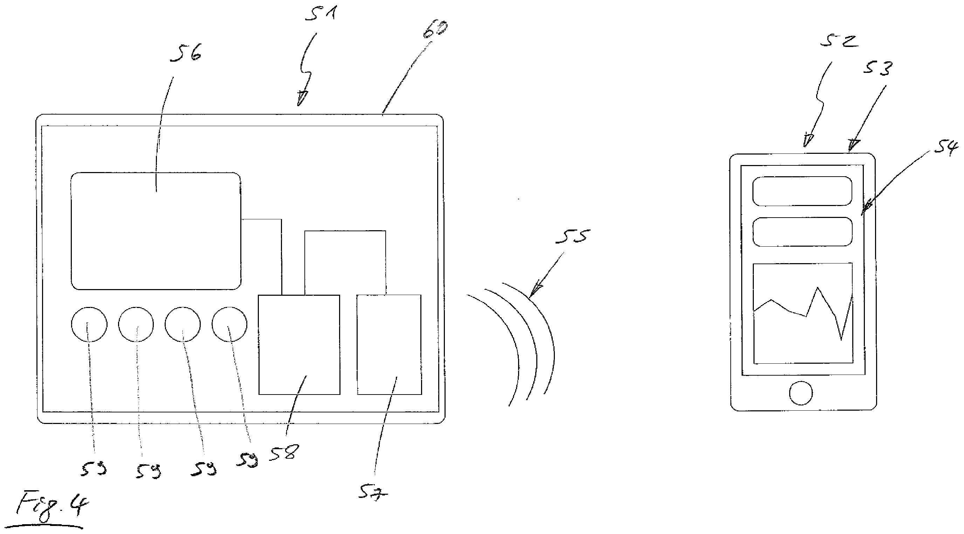

Die **Fig. 4** zeigt eine schematische Darstellung einer Bedieneinrichtung 51 zusammen mit einer Steuervorrichtung 52. Die Steuervorrichtung 52 ist als ein Mobiltelefon 53 mit einem Berührungsbildschirm 54 ausgebildet und über eine Funkdatenverbindung 55 mit der Bedieneinrichtung 51 gekoppelt bzw. verbunden. Die Bedieneinrichtung 51 verfügt über einen Bildschirm 56 einen Prozessor 57, eine SPS-Steuerung 58 sowie Bedienschaltern 59. Diese Komponenten sind in einem druckgekapselten Gehäuse 60, welches dem ATEX-Standard entspricht, aufgenommen. Einer Bedienperson steht mit den Bedienschaltern 59 eine eingeschränkte Funktionalität der hier nicht näher dargestellten Pumpeneinheit zur Verfügung, wobei eine volle Funktionalität dieser Pumpeneinheit mittels der Steuervorrichtung 52 genutzt werden kann.

## Patentansprüche

1. Verfahren zur Steuerung eines Pumpensystems (10, 34, 45) mit einer Pumpeneinheit (11, 44, 46) zum Ausgeben von Mehrkomponentenmaterial unter Druck mit einer Spritzpistole, wobei die Pumpeneinheit eine Pumpenvorrichtung (12, 35), einen Mischer (13, 47) und eine Spritzpistole (14, 48) umfasst, wobei die Pumpenvorrichtung zumindest zwei Pumpen (16, 17, 36, 37) zur Förderung von Komponentenmaterial und jeweils zugeordnete Flüssigkeitsspeicher (18, 19, 38, 39) zur Speicherung von Komponentenmaterial aufweist, wobei das Pumpensystem eine Steuervorrichtung (24, 52) aufweist, wobei die Steuervorrichtung eine Steuereinrichtung (26) und eine Datenbank (27) umfasst,
**dadurch gekennzeichnet,**
**dass** in der Datenbank Rezepturen zur Mischung von Mehrkomponentenmaterialien gespeichert sind, wobei die Datenbank in regelmäßigen Zeitabständen oder nach Anforderung von der Steuervorrichtung mit zumindest einer weiteren externen Datenbank (33) synchronisiert wird, wobei mittels der Steuereinrichtung eine Steuerung der Pumpeneinheit in Abhängigkeit einer Rezeptur erfolgt.

2. Verfahren nach Anspruch 1,
**dadurch gekennzeichnet,**
**dass** die Pumpenvorrichtung (12, 35) eine Bedieneinrichtung (23, 40, 51) aufweist, mittels der eine Steuerung der Pumpenvorrichtung (12, 35) erfolgt, wobei die Steuervorrichtung (24, 52) zusammen mit der Bedieneinrichtung eine Steuereinheit (25, 41) ausbildet, mittels der eine Steuerung der Pumpeneinheit (11, 44, 46) erfolgt.

3. Verfahren nach Anspruch 2,
**dadurch gekennzeichnet,**
**dass** von der Steuereinheit (25, 41) Umgebungsparameter, Betriebszustände, Betriebsparameter und/oder Fehlermeldungen der Pumpenvorrichtung (12, 35) für einen Betriebszeitabschnitt kontinuierlich in der Datenbank (27) gespeichert werden.

4. Verfahren nach einem der vorangehenden Ansprüche,
**dadurch gekennzeichnet,**
**dass** die Steuereinrichtung (26) Umgebungsparameter, Betriebszustände, Betriebsparameter und/oder Fehlermeldungen verarbeitet, wobei die Steuereinrichtung in der Datenbank (27) eine Anpassung bzw. Änderung der Rezepturen vornimmt.

5. Verfahren nach einem der vorangehenden Ansprüche,
**dadurch gekennzeichnet,**
**dass** mittels der Steuervorrichtung (24, 52) ein Datenaustausch mit einem externen Netzwerk (31) erfolgt.

6. Verfahren nach Anspruch 5,
**dadurch gekennzeichnet,**
**dass** die Rezepturen mit Herstellerrezepturen von Mehrkomponentenmaterial synchronisiert werden.

7. Verfahren nach einem der vorangehenden Ansprüche,
**dadurch gekennzeichnet,**
**dass** die Steuereinrichtung (26) einen Typ von Spritzpistole (14, 48), Mischer (13, 47) und/oder Pumpenvorrichtung (12, 35) erkennt, wobei die Steuereinrichtung die Rezepturen unter Berücksichtigung des jeweiligen Typs korrigiert.

8. Verfahren nach einem der vorangehenden Ansprüche,
**dadurch gekennzeichnet,**
**dass** die Steuereinrichtung (26) Umgebungsparameter, Betriebszustände, Betriebsparameter und/oder Fehlermeldungen unter Berücksichtigung der Rezepturen auf Plausibilität prüft.

9. Verfahren nach einem der vorangehenden Ansprüche,
**dadurch gekennzeichnet,**
**dass** von der Bedieneinrichtung (23, 40, 51) Umgebungsparameter, Betriebszustände, Betriebsparameter und/oder Fehlermeldungen der Pumpenvorrichtung (12, 35) an die Steuervorrichtung (24, 52) übermittelt werden, wobei die Steuervorrichtung die Umgebungsparameter, Betriebszustände, Betriebsparameter und/oder Fehlermeldungen weiterverarbeitet.

10. Verfahren nach einem der vorangehenden Ansprüche,
**dadurch gekennzeichnet,**
**dass** von der Spritzpistole (14, 48) Umgebungsparameter, Betriebszustände, Betriebsparameter und/oder Fehlermeldungen der Spritzpistole an die Steuervorrichtung (24, 52) übermittelt werden, wobei die Steuereinrichtung (26) die Rezepturen unter Berücksichtigung der jeweiligen Umgebungsparameter, Betriebszustände, Betriebsparameter und/oder Fehlermeldungen der Spritzpistole korrigiert.

11. Verfahren nach einem der vorangehenden Ansprüche,
**dadurch gekennzeichnet,**
**dass** Umgebungsparameter, Betriebszustände, Betriebsparameter und/oder Fehlermeldungen für einen Betriebszeitabschnitt kontinuierlich von der Steuervorrichtung (24, 52) gespeichert werden.

12. Verfahren nach einem der vorangehenden Ansprüche,
**dadurch gekennzeichnet,**
**dass** die Steuervorrichtung (24, 52) eine schriftliche Dokumentation der Umgebungsparameter, Betriebszustände, Betriebsparameter und/oder Fehlermeldungen für einen Betriebszeitabschnitt erstellt.

13. Verfahren nach einem der vorangehenden Ansprüche,
**dadurch gekennzeichnet,**
**dass** von der Bedieneinrichtung (23, 40, 51) und/oder der Steuervorrichtung (24, 52) Umgebungsparameter, Betriebszustände, Betriebsparameter und/oder Fehlermeldungen der Pumpenvorrichtung (12, 35) an die Spritzpistole (14, 48) übermittelt werden.

14. Verfahren nach einem der vorangehenden Ansprüche,
**dadurch gekennzeichnet,**
**dass** Statusmeldungen der Steuervorrichtung (24, 52) an die Bedieneinrichtung (23, 40, 51) und/oder die Spritzpistole (14, 48) übertragen und angezeigt werden.

15. Verfahren nach einem der vorangehenden Ansprüche,
**dadurch gekennzeichnet,**
**dass** mittels der Steuervorrichtung (24, 52) eine Dokumentation des Pumpensystems (10, 34, 45) zur Verfügung gestellt wird.

16. Pumpensystem (10, 34, 45) mit einer Pumpeneinheit (11, 44, 46) zum Ausgeben von Mehrkomponentenmaterial unter Druck mit einer Spritzpistole, wobei die Pumpeneinheit eine Pumpenvorrichtung (12, 35), einen Mischer (13, 47) und eine Spritzpistole (14, 48) umfasst, wobei die Pumpenvorrichtung zumindest zwei Pumpen (16, 17, 36, 37) zur Förderung von Komponentenmaterial und jeweils zugeordnete Flüssigkeitsspeicher (18, 19, 38, 39) zur Speicherung von Komponentenmaterial aufweist, wobei das Pumpensystem eine Steuervorrichtung (24, 52) aufweist, wobei die Steuervorrichtung eine Steuereinrichtung (26) zur Steuerung der Pumpeneinheit und eine Datenbank (27) umfasst,
**dadurch gekennzeichnet,**
**dass** in der Datenbank Rezepturen zur Mischung von Mehrkomponentenmaterialien gespeichert sind, wobei die Datenbank in regelmäßigen Zeitabständen oder nach Anforderung von der Steuervorrichtung mit zumindest einer weiteren externen Datenbank (33) synchronisierbar ist, wobei mittels der Steuereinrichtung die Pumpeneinheit in Abhängigkeit einer Rezeptur steuerbar ist.

17. Pumpensystem nach Anspruch 16,
**dadurch gekennzeichnet,**
**dass** die Pumpenvorrichtung (12, 35) eine Bedieneinrichtung (23, 40, 51) zur Steuerung der Pumpenvorrichtung aufweist, wobei die Steuervorrichtung (24, 52) zusammen mit der Bedieneinrichtung eine Steuereinheit (25, 41) zur Steuerung der Pumpeneinheit (11, 44, 46) ausbildet, wobei mittels der Steuereinheit die Pumpeneinheit steuerbar ist.

18. Pumpensystem nach Anspruch 16 oder 17,
**dadurch gekennzeichnet,**
**dass** die Steuervorrichtung (24, 52) von der Pumpeneinheit (11, 44, 46) örtlich beabstandet angeordnet ist.

19. Pumpensystem nach einem der Ansprüche 16 bis 18,
**dadurch gekennzeichnet,**
**dass** die Steuervorrichtung (24, 52) zum Datenaustausch mit einem externen Netzwerk (31) ausgebildet ist.

## Claims

1. A method for controlling a pump system (10, 34, 45) having a pump unit (11, 44, 46) for dispensing multi-component material under pressure by means of a spray gun, the pump unit comprising a pump device (12, 35), a mixer (13, 47) and a spray gun (14, 48), the pump device having at least two pumps (16, 17, 36, 37) for pumping component material and respective associated liquid tanks (18, 19, 38, 39) for storing component material,
the pump system having a control device (24, 52), the control device comprising a control means (26) and a database (27), **characterized in that**
recipes for mixing multi-component materials are stored in the database, the database being synchronized at regular intervals or upon request by the control device with at least one other external database (33), the pump unit being controlled by means of the control means as a function of a recipe.

2. The method according to claim 1,
**characterized in that**
the pump device (12, 35) has an operating means (23, 40, 51) by means of which the pump device (12, 35) is controlled, the control device (24, 52) and the operating means together forming a control unit (25, 41) by means of which the pump unit (11, 44, 46) is controlled.

3. The method according to claim 2,
**characterized in that**
the control unit (25, 41) continuously stores environmental parameters, operating states, operating parameters and/or error messages of the pump device (12, 35) for an operating period in the database (27).

4. The method according to any one of the preceding claims,
**characterized in that**
the control means (26) processes environmental parameters, operating states, operating parameters and/or error messages, the control means adjusting and changing the recipes in the database (27).

5. The method according to any one of the preceding claims,
**characterized in that**
data is exchanged with an external network (31) by means of the control device (24, 52).

6. The method according to claim 5,
**characterized in that**
the recipes are synchronized with producer recipes of multi-component material.

7. The method according to any one of the preceding claims,
**characterized in that**
the control means (26) recognizes a type of spray gun (14, 48), mixer (13, 47) and/or pump device (12, 35), the control means correcting the recipes in consideration of the respective type.

8. The method according to any one of the preceding claims,
**characterized in that**
the control means (26) checks environmental parameters, operating states, operating parameters and/or error messages for plausibility in consideration of the recipes.

9. The method according to any one of the preceding claims,
**characterized in that**
the operating means (23, 40, 51) transmits environmental parameters, operating states, operating parameters and/or error messages of the pump device (12, 35) to the control device (24, 52), the control device processing the environmental parameters, operating states, operating parameters and/or error messages.

10. The method according to any one of the preceding claims,
**characterized in that**
the spray gun (14, 48) transmits environmental parameters, operating states, operating parameters and/or error messages of the spray gun to the control device (24, 52), the control means (26) correcting the recipes in consideration of the respective environmental parameters, operating states, operating parameters and/or error messages of the spray gun.

11. The method according to any one of the preceding claims,
**characterized in that**
environmental parameters, operating states, operating parameters and/or error messages for an operating period are continuously stored by the control device (24, 52).

12. The method according to any one of the preceding claims,
**characterized in that**
the control device (24, 52) produces written documentation of the environmental parameters, operating states, operating parameters and/or error messages for an operating period.

13. The method according to any one of the preceding claims,
**characterized in that**
the operating means (23, 40, 51) and/or the control device (24, 52) transmit(s) environmental parameters, operating states, operating parameters and/or error messages of the pump device (12, 35) to the spray gun (14, 48).

14. The method according to any one of the preceding claims,
**characterized in that**
status reports of the control device (24, 52) are transmitted to the operating means (23, 40, 51) and/or to the spray gun (14, 48) and are displayed.

15. The method according to any one of the preceding claims,
**characterized in that**
documentation of the pump system (10, 34, 45) is made available by means of the control device (24, 52).

16. A pump system (10, 34, 45) having a pump unit (11, 44, 46) for dispensing multi-component material under pressure by means of a spray gun, the pump unit comprising a pump device (12, 35), a mixer (13, 47) and a spray gun (14, 48), the pump device having at least two pumps (16, 17, 36, 37) for pumping component material and respective associated liquid tanks (18, 19, 38, 39) for storing component material,
the pump system having a control device (24, 52), the control device comprising a control means (26) for controlling the pump unit and a database (27),
**characterized in that**
recipes for mixing multi-component materials are stored in the database, the database (27) being synchronizable at regular intervals or upon request by the control device with at least one other external database (33), the pump unit being controllable by means of the control means as a function of a recipe.

17. The pump system according to claim 16,
**characterized in that**
the pump device (12, 35) has an operating means (23, 40, 51) for controlling the pump device, the control device (24, 52) and the operating means together forming a control unit (25, 41) for controlling the pump unit (11, 44, 46), the pump unit being controllable by means of the control unit.

18. The pump system according to claim 16 or 17,
**characterized in that**
the control device (24, 52) is arranged at a distance from the pump unit (11, 44, 46).

19. The pump system according to any one of claims 16 to 18,
**characterized in that**
the control device (24, 52) is configured to exchange data with an external network (31).

## Revendications

1. Procédé pour contrôler un système de pompe (10, 34, 45) ayant une unité de pompe (11, 44, 46) pour distribuer du matériau à composants multiples sous pression au moyen d'un pistolet pulvérisateur, l'unité de pompe comprenant un dispositif de pompe (12, 35), un mélangeur (13, 47) et un pistolet pulvérisateur (14, 48), le dispositif de pompe ayant au moins deux pompes (16, 17, 36, 37) pour refouler du matériau de composants et des réservoirs de liquide (18, 19, 38, 39) associés respectifs pour stocker du matériau de composants, le système de pompe ayant un dispositif de contrôle (24, 52), le dispositif de contrôle comprenant un moyen de contrôle (26) et une base de données (27),
**caractérisé en ce que**
des recettes pour mélanger des matériaux à composants multiples sont stockées dans la base de données, la base de données étant synchronisée avec au moins une autre base de données (33) externe à intervalles réguliers ou sur demande par le dispositif de contrôle, l'unité de pompe étant contrôlée au moyen du moyen de contrôle en fonction d'une recette.

2. Procédé selon la revendication 1,
**caractérisé en ce que**
le dispositif de pompe (12, 35) a un moyen de commande (23, 40, 51) au moyen duquel le dispositif de pompe (12, 35) est contrôlé, le dispositif de contrôle (24, 52) et le moyen de commande conjointement formant une unité de contrôle (25, 41) au moyen de laquelle l'unité de pompe (11, 44, 46) est contrôlée.

3. Procédé selon la revendication 2,
**caractérisé en ce que**
l'unité de contrôle (25, 41) stocke en continu des paramètres environnementaux, des états de fonctionnement, des paramètres de fonctionnement et/ou des messages d'erreur du dispositif de pompe (12, 35) pour une période de fonctionnement dans une base de données (27).

4. Procédé selon l'une quelconque des revendications précédentes,
**caractérisé en ce que**
le moyen de contrôle (26) trait des paramètres environnementaux, des états de fonctionnement, des paramètres de fonctionnement et/ou des messages d'erreur, le moyen de contrôle adaptant et changeant les recettes dans la base de données (27).

5. Procédé selon l'une quelconque des revendications précédentes,
**caractérisé en ce que**
des données sont échangées avec un réseau externe (31) au moyen du dispositif de contrôle (24, 52).

6. Procédé selon la revendication 5,
**caractérisé en ce que**
les recettes sont synchronisées avec des recettes des fabricants d'un matériau à composants multiples.

7. Procédé selon l'une quelconque des revendications précédentes,
**caractérisé en ce que**
le moyen de contrôle (26) reconnaît un type de pistolet pulvérisateur (14, 48), de mélangeur (13, 47) et/ou de moyen de pompe (12, 35), le moyen de contrôle corrigeant les recettes en tenant compte du type respectif.

8. Procédé selon l'une quelconque des revendications précédentes,
**caractérisé en ce que**
le moyen de contrôle (26) vérifie la plausibilité des paramètres environnementaux, des états de fonctionnement, des paramètres de fonctionnement et/ou des messages d'erreur en tenant compte des recettes.

9. Procédé selon l'une quelconque des revendications précédentes,
**caractérisé en ce que**
le moyen de commande (23, 40, 51) transmet des paramètres environnementaux, des états de fonctionnement, des paramètres de fonctionnement et/ou des messages d'erreur du dispositif de pompe (12, 35) au dispositif de contrôle (24, 52), le dispositif de contrôle traitant les paramètres environnementaux, les états de fonctionnement, les paramètres de fonctionnement et/ou les messages d'erreur.

10. Procédé selon l'une quelconque des revendications précédentes,
**caractérisé en ce que**
le pistolet pulvérisateur (14, 48) transmet des paramètres environnementaux, des états de fonctionnement, des paramètres de fonctionnement et/ou des messages d'erreur du pistolet pulvérisateur au dispositif de contrôle (24, 52), le moyen de contrôle (26) corrigeant les recettes en tenant compte des paramètres environnementaux respectifs, des états de fonctionnement respectifs, des paramètres de fonctionnement respectifs et/ou des messages d'erreur respectifs du pistolet pulvérisateur.

11. Procédé selon l'une quelconque des revendications précédentes,
**caractérisé en ce que**
des paramètres environnementaux, des états de fonctionnement, des paramètres de fonctionnement et/ou des messages d'erreur pour une période de fonctionnement sont stockés en continu par le dispositif de contrôle (24, 52).

12. Procédé selon l'une quelconque des revendications précédentes,
**caractérisé en ce que**
le dispositif de contrôle (24, 52) crée une documentation écrite des paramètres environnementaux, des états de fonctionnement, des paramètres de fonctionnement et/ou des messages d'erreur pour une période de fonctionnement.

13. Procédé selon l'une quelconque des revendications précédentes,
**caractérisé en ce que**
le moyen de commande (23, 40, 51) et/ou le dispositif de contrôle (24, 52) transmet(tent) des paramètres environnementaux, des états de fonctionnement, des paramètres de fonctionnement et/ou des messages d'erreur du dispositif de pompe (12, 35) au pistolet pulvérisateur (14, 48).

14. Procédé selon l'une quelconque des revendications précédentes,
**caractérisé en ce que**
des messages d'état du dispositif de contrôle (24, 52) sont transmis au moyen de commande (23, 40, 51) et/ou au pistolet pulvérisateur (14, 48) et sont affichés.

15. Procédé selon l'une quelconque des revendications précédentes,
**caractérisé en ce**
**qu'**une documentation du système de pompe (10, 34, 45) est fournie au moyen du dispositif de contrôle (24, 52).

16. Système de pompe (10, 34, 45) ayant une unité de pompe (11, 44, 46) pour distribuer du matériau à composants multiples sous pression au moyen d'un pistolet pulvérisateur, l'unité de pompe comprenant un dispositif de pompe (12, 35), un mélangeur (13, 47) et un pistolet pulvérisateur (14, 48), le dispositif de pompe ayant au moins deux pompes (16, 17, 36, 37) pour refouler du matériau de composants et des réservoirs de liquide (18, 19, 38, 39) associés respectifs pour stocker du matériau de composants, le système de pompe ayant un dispositif de contrôle (24, 52), le dispositif de contrôle comprenant un moyen de contrôle (26) pour contrôler l'unité de pompe et une base de données (27),
**caractérisé en ce que**
des recettes pour mélanger des matériaux à composants multiples sont stockées dans la base de données, la base de données étant synchronisable avec au moins une autre base de données (33) externe à intervalles réguliers ou sur demande par le dispositif de contrôle, l'unité de pompe étant contrôlable au moyen du moyen de contrôle en fonction d'une recette.

17. Système de pompe selon la revendication 16,
**caractérisé en ce que**
le dispositif de pompe (12, 35) a un moyen de commande (23, 40, 51) pour contrôler le dispositif de pompe, le dispositif de contrôle (24, 52) et le moyen de commande conjointement formant une unité de contrôle (25, 41) pour contrôler l'unité de pompe (11, 44, 46), l'unité de pompe étant contrôlable au moyen de l'unité de contrôle.

18. Système de pompe selon la revendication 16 ou 17,
**caractérisé en ce que**
le dispositif de contrôle (24, 52) est disposé à distance de l'unité de pompe (11, 44, 46).

19. Système de pompe selon l'une quelconque des revendications 16 à 18,
**caractérisé en ce que**
le dispositif de contrôle (24, 52) est configuré pour échanger des données avec un réseau externe (31).
